# EUROPÄISCHE PATENTSCHRIFT

(11) **EP 1 287 966 B1**
(45) Veröffentlichungstag und Bekanntmachung des Hinweises auf die Patenterteilung: **19.07.2006**
(21) Anmeldenummer: 02013768.3
(22) Anmeldetag: 21.06.2002
(51) Int. Cl.: B29C 45/67

(54) **Positionierung einer Verriegelungskassette**
Positioning of a clamping cassette
Positionnement d'une cassette de verrouillage

(30) Priorität: 29.08.2001 DE 20114234 U
(43) Veröffentlichungstag der Anmeldung: 05.03.2003
(73) Patentinhaber: Battenfeld GmbH, D-58540 Meinerzhagen (DE)
(72) Erfinder: Kassner, Ralf, 58566 Kierspe (DE); Maras, Helmuth, 58540 Meinerzhagen (DE)

(56) Entgegenhaltungen:
- DE-A- 1 704 113
- DE-A- 2 429 570
- PATENT ABSTRACTS OF JAPAN vol. 1997, no. 4, 30. April 1997 (1997-04-30) -& JP 08 323767 A (MEIKI CO LTD), 10. Dezember 1996 (1996-12-10) -& DATABASE WPI Week 199708 Derwent Publications Ltd., London, GB; AN 1997-082140 XP002224057 & JP 08 323767 A
- PATENT ABSTRACTS OF JAPAN vol. 17, no. 595 (M-1503), 29. Oktober 1993 (1993-10-29) -& JP 05 177642 A (NISSEI PLASTICS IND CO), 20. Juli 1993 (1993-07-20)

## Beschreibung

Die Erfindung betrifft eine Vorrichtung zum mechanischen Positionieren einer Verriegelungskassette, die ein Druckerzeugungssystem mit einem Druckkissen, einem Druckkissenkolben, einer Verriegelungskassette mit mindestens einem Schieber und einem Druckstempel umfasst.

Bei der Herstellung von Kunststoffteilen wird plastische Kunststoffmasse in ein Kunstoffformwerkzeug mit hohem Druck eingespritzt. Hierzu ist es erforderlich, die beiden Werkzeughälften fest aufeinander zu pressen und den erforderlichen Gegendruck aufzubringen.

Über einen Druckstempel wird die bewegliche Werkzeughälfte an der festen Werkzeughälfte zur Anlage gebracht und anschließend über ein Druckkissen der Hochdruck aufgebaut. Zuvor ist es erforderlich, den Druckstempel in dieser Stellung zu verriegeln, damit die aufgebrachte Druckkraft auch übertragen werden kann, vgl. z.B. die DE-A-1704113.

Die exakte Verriegelungsposition wird über Wegmeßsysteme bestimmt und führt immer wieder zu Fehlstellungen, was eine Korrektur der Position erfordert.

**Aufgabe** der Erfindung ist es, durch geeignete Maßnahmen die genau Positionierung der Verriegelungskassette zu vereinfachen.

Die **Lösung** der Aufgabe ist in Verbindung mit dem Oberbegriff des Anspruchs 1 dadurch gekennzeichnet, dass am Druckstempel ein Anschlagdeckel angeordnet ist, um die Position der Verriegelungskassette zu verändern.

Vorteilhafter Weise hat der Anschlagdeckel mindestens einen Vorsprung, der über den Außendurchmesser des Druckstempels hinausragt. Dieser Vorsprung kann beim Verfahren des Druckstempels die Verriegelungskassette mitnehmen und in ihrer Position verändern.

Die Geometrie des Anschlagdeckels ist dabei so gewählt, dass die Mittelachse des mindestens einen Schiebers der Verriegelungskassette weitgehendst mit der Mittelachse einer Nut im Druckstempel fluchtet. Die Verrieglungskassette wird also im günstigsten Fall bereits während des Verfahrens des Druckstempels in eine Position gebracht, die zum Einfahren des mindestens einen Schiebers in die Nut des Druckstempels erforderlich ist.

Mit der vorgeschlagenen Lösung ist es somit möglich, die Verriegelungskassette auf mechanischem Wege relativ zum Druckstempel derart zu positionieren, dass mindesten ein Schieber exakt in die Nut des Druckstempels eingefahren werden kann. Die erforderliche Zeit zum Aufbau des Hochdrucks kann reduziert werden. Weiterhin kann die Bewegung des mindestens einen Schiebers bereits aktiviert werden, bevor der eigentliche Schließvorgang des Werkzeuges beendet ist. Gleiches gilt entsprechend umgekehrt beim Öffnungsvorgang. Die Gesamtzykluszeit kann folglich um ein Vielfaches reduziert werden.

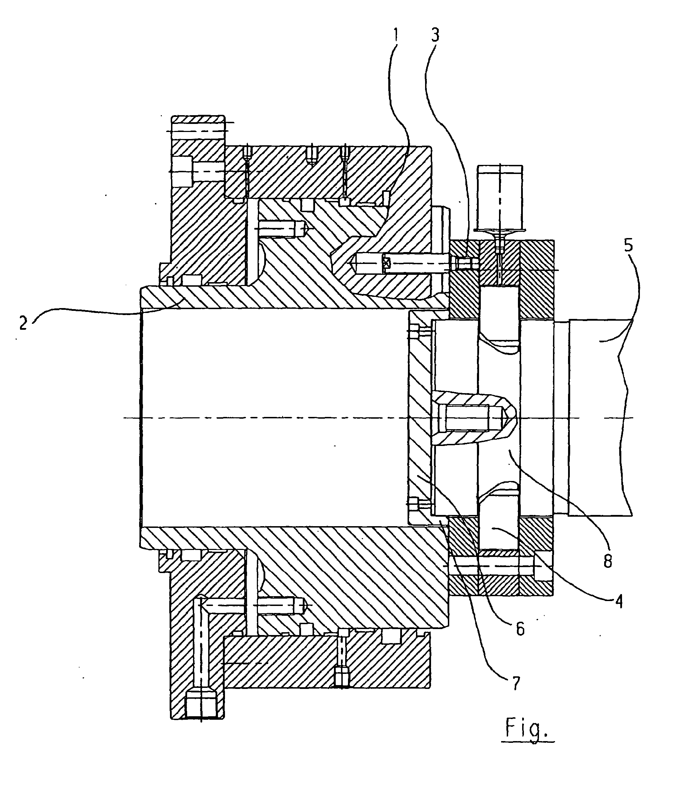

In der Zeichnung ist schematisch ein Ausführungsbeispiel der Erfindung dargestellt.

Die Figur zeigt einen Schnitt durch das Druckerzeugungssystem mit dem Druckkissen 1 und dem Druckkolben 2. Am Druckkissen 1 ist eine Verriegelungskassette 3 angeordnet, die mindestens einen Schieber 4 umfasst.

Im Gesamtsystem ist ein Druckstempel 5 axial verschiebbar, an dessen einem Ende ein Anschlagdeckel 6 befestigt ist. Der Anschlagdeckel 6 verfügt über mindestens einen Vorsprung 7, der über den Außendurchmesser des Druckstempels 5 hinausgeht. Hierdurch wird es ermöglicht, dass beim Verfahren des Druckstempels 5 der Anschlagdeckel an der Wandung der Verriegelungskassette 3 anschlägt und diese mitnimmt.

Der Vorsprung ist so gewählt, dass die Mittelachse des Schiebers 4 mit der Mittelachse der Nut 8 im Druckstempel 5 fluchtet, wenn die Verriegelungskassette 3 über den Anschlagdeckel 6 mitgenommen wird.

### Bezugszeichenliste:

- 1: Druckkissen
- 2: Druckkissenkolben
- 3: Verriegelungskassette
- 4: Schieber in Verriegelungskassette 3
- 5: Druckstempel
- 6: Anschlagdeckel
- 7: Vorsprung am Anschlagdeckel 6
- 8: Nut in Druckstempel 5

## Patentansprüche

1. Vorrichtung zum mechanischen Positionieren einer Verriegelungskassette (3), die ein Druckerzeugungssystem mit
- einem Druckkissen (1),
- einem Druckkissenkolben (2),
- einer Verriegelungskassette (3) mit mindestens einem Schieber (4) und
- einen Druckstempel (5)
umfasst,
**dadurch gekennzeichnet, dass**
am Druckstempel (5) ein Anschlagdeckel (6) angeordnet ist, um die Position der Verriegelungskassette (3) zu verändern.

2. Vorrichtung nach Anspruch 1, **dadurch gekennzeichnet, dass** mindestens ein Vorsprung (7) am Anschlagdeckel (6) angeordnet ist der über den Außendurchmesser des Druckstempels (5) hinausragt, um die Verriegelungskassette (3) in ihrer Position zu verändern.

3. Vorrichtung nach Anspruch 1 oder 2, **dadurch gekennzeichnet, dass** die Geometrie des Anschlagdeckels (6) so gewählt ist, dass die Mittelachse des mindestens einen Schiebers (4) der Verriegelungskassette (3) weitgehendst mit der Mittelachse einer Nut (8) im Druckstempel (5) fluchtet.

## Claims

1. Device for mechanical positioning of a locking cassette (3), which comprises a pressure-generating system having
- a pressure pad (1),
- a pressure-pad piston (2),
- a locking cassette (3) having at least one slide (4) and
- a pressure ram (5),
**characterised in that** a stop cover (6) is arranged on the pressure ram (5) in order to change the position of the locking cassette (3).

2. Device according to claim 1, **characterised in that** at least one projection (7) is arranged on the stop cover (6), which projects beyond the external diameter of the pressure ram (5) in order to change the position of the locking cassette (3).

3. Device according to claim 1 or 2, **characterised in that** the geometry of the stop cover (6) is selected so that the central axis of the at least one slide (4) of the locking cassette (3) is largely aligned with the central axis of a groove (8) in the pressure ram (5).

## Revendications

1. Dispositif de positionnement mécanique d'une cassette de verrouillage (3), qui comprend un système de production de pression comportant
- un coussin de pression (1),
- un piston de coussin de pression (2),
- une cassette de verrouillage (3) comportant au moins un coulisseau (4) et
- un poinçon de pression (5),
**caractérisé par le fait que**
sur le poinçon de pression (5) est placé un couvercle de butée (6) pour la modification de la position de la cassette de verrouillage (3).

2. Dispositif selon la revendication 1, **caractérisé par le fait que** sur le couvercle de butée (6) est prévue une saillie (7) qui dépasse le diamètre extérieur du poinçon de pression (5) pour la modification de la position de la cassette de verrouillage (3).

3. Dispositif selon l'une des revendications 1 et 2, **caractérisé par le fait que** la forme du couvercle de butée (6) est choisie de façon que l'axe du ou de chaque coulisseau (4) de la cassette de verrouillage (3) soit très largement aligné avec l'axe d'une rainure (8) faite dans le poinçon de pression (5).
